# EUROPEAN PATENT APPLICATION

(11) **EP 2 759 895 A2**
(43) Date of publication of application: **30.07.2014**
(21) Application number: 14150513.1
(22) Date of filing: 08.01.2014
(51) Int. Cl.: G05B 13/02

(54) **System and method for automatically and dynamically varying the feedback to an operator by an automated system**

(30) Priority: 23.01.2013 US 201313747835
(71) Applicant: Honeywell International Inc., Morristown, NJ 07962-2245 (US)
(72) Inventor: Rogers, William, Morristown, NJ New Jersey 07962-2245 (US); Dorneich, Michael Christian, Morristown, NJ New Jersey 07962-2245 (US); Whitlow, Stephen, Morristown, NJ New Jersey 07962-2245 (US); Hamblin, Chris, Morristown, NJ New Jersey 07962-2245 (US)
(74) Representative: Houghton, Mark Phillip

(57) **Abstract**

A system and method for adaptively operating an automated system is provided. one or more of a state of the automated system and a state of an operator of the automated system is estimated, in a processor and, based on one or both of the estimated state of the automated system and the estimated state of the operator, the interaction between the automated system and the operator is varied. The interaction may be varied by at least one or more of rendering, on one or more displays, data representative of one or more automated processes being implemented in the automated system, generating aural sounds representative of one or more automated processes being implemented in the automated system, and generating, in the automated system, feedback requests that require the operator to supply one or more inputs to the automated system.

## Description

### TECHNICAL FIELD

The present invention generally relates to human-machine interaction, and more particularly relates to a system and method for automatically and dynamically varying operator interaction with an automated system.

### BACKGROUND

Many modem automated systems, such as modem aircraft flight decks, are highly automated, and thus often relegate an operator to the role of a passive monitor. This is known to induce operator disengagement. For example, in the context of a modem, highly-automated commercial aircraft, pilots can become bored, inattentive, and fatigued when passively monitoring a system for extended periods of time, as is required during the cruise phase of modem. Modem automated systems typically perform operations in silence, and may provide information to an operator only when something is going wrong. When everything is going according to plan, the automated system performs its operations in silence. Thus, operators miss out on opportunities to learn what the system is doing and how it is functioning, and furthermore tend to become reactive to many situations, rather than proactively diagnosing and rectifying these situations. Further, even in abnormal situations, the automated feedback only provides information about states and statuses, and not the whys and wherefores behind these states and automated behavior.

Traditionally, the human-machine interaction of an automated system is fixed at design time and is not, and indeed cannot be, varied. Thus, an automated system will consistently query or notify an operator regardless of whether the operator is fatigued, distracted, or performing a particular operation. There are many circumstances where a change in interaction style could improve the performance of human-machine interactions. For example, instead of waiting to inform an operator that something has reached an alert threshold, the automated system could proactively engage the operator to become more active and engaged by requiring the operator to diagnose and investigate the trend instead of just passively waiting for an alert. Thus, the operator can avoid a situation escalating to an alert. In addition, many automated system operators, such as pilots, vary in their levels of expertise. Young or inexperienced operators may still be learning about an automated system and are actively adding to their mental model of system operation based on his or her interactions with the system during operations. By adopting an increased interaction style, the automation could facilitate the learning of an inexperienced operator by providing more feedback on the state and nature of system operations.

Hence, there is a need for a system and method that can automatically and dynamically adapt the level of human-machine interaction of an automated system. The present invention addresses at least this need.

### BRIEF SUMMARY

In one embodiment, a method of adaptively operating an automated system includes estimating, in a processor, one or more of a state of the automated system and a state of an operator of the automated system and, one or both of the estimated state of the automated system and the estimated state of the operator, varying the interaction between the automated system and the operator.

In another embodiment, a method of adaptively operating an automated system includes estimating, in a processor, a cognitive state of an operator of the automated system and, based on the estimated cognitive state of the operator, varying the interaction between the automated system and the operator. The interaction is varied by one or more of rendering, on one or more displays, data representative of one or more automated processes being implemented in the automated system, generating aural sounds representative of one or more automated processes being implemented in the automated system, and generating, in the automated system, feedback requests that require the operator to supply one or more inputs to the automated system.

Furthermore, other desirable features and characteristics of the system and method described herein will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of an example dynamically adaptable automated system; and
FIG. 2 depicts one embodiment of a process, in flowchart form, for selectively varying the interaction between an operator and the automated system depicted in FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

The techniques and technologies described here can be deployed in numerous end-use environments that employ automated systems. Such environments include homes, processing plants, power plants, and any one of numerous vehicles. Some exemplary vehicles include, but are not limited to: aircraft; watercraft; road vehicles such as cars, buses, trucks, and motorcycles; spacecraft; trains; subways; specialty equipment (e.g., construction equipment, factory equipment, etc.); trams; and the like. Thus, while some particular embodiments described herein may relate to aircraft applications, the subject matter is not limited or restricted to such aircraft applications.

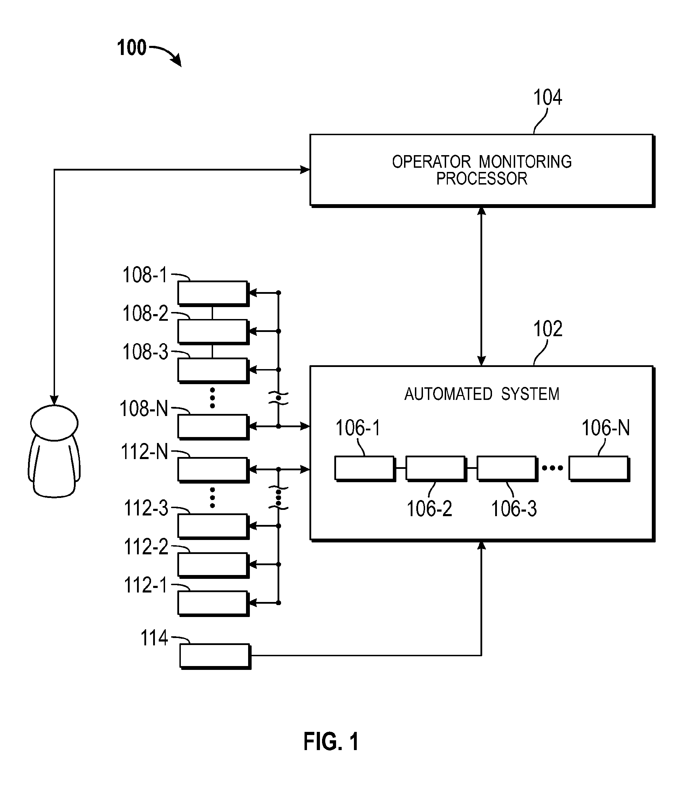

Referring now to FIG. 1, a functional block diagram of an example dynamically adaptable automated system 100 is depicted, and includes an automated system 102 and an operator monitoring processor 104. The automated system 102 may be variously configured and implemented, but typically includes one or more subsystems 106 (e.g., 106-1, 106-2, 106-3, ... 106-N), one or more operator feedback devices 108 (e.g., 108-1, 108-2, 108-3, .. . 108-N), and one or more user interfaces 112 (e.g., 112-1, 112-2, 112-3, ... 112-N). The one or more subsystems 106 are configured to automatically implement one or more processes without operator intervention. The processes that are automatically implemented by the subsystems 106 will vary depending upon the purpose and function of the automated system 102. One example of an automated system 102 that includes a plurality of subsystems 106 is an aircraft avionics system.

The one or more operator feedback devices 108 are in operable communication with, and receive data that may be supplied from, one or more of the subsystems 106. The feedback devices 108, in response to the received data, are configured to supply various types of information to an operator 109. The type of information conveyed to the operator 109 may vary. Moreover, the manner in which the information is conveyed may vary depending, for example, on how the feedback devices 108 implemented. For example, the feedback devices 108 may be implemented as display devices, aural devices, haptic devices, or various combinations thereof, just to name a few.

The one or more user interfaces 112 are also in operable communication with one or more of the subsystems 106. The user interfaces are configured to receive user input from the operator, and supply user-input data representative thereof to the appropriate subsystems 106. The user interfaces 112 may be variously configured and implemented and may include, for example, a mouse, a keyboard, a keypad, a roller ball, a track balls, and various combinations thereof, just to name a few. One or more of the user interfaces 112 may also be integrated within a feedback device 108. For example, one or more of the feedback devices 108 may be implemented as a touch screen display device, which functions to provide both feedback and receive user input.

The operator monitoring processor 104 is in operable communication with the automated system 102, and is configured to estimate at least the cognitive state of the operator 109. As used herein, the term "cognitive state" refers to the general state of the operator's mental processing attributes such as, for example, awareness, perception, reasoning, current task load, and judgment. As such, the operator monitoring processor 104 can determine if the operator 109 is, for example, disengaged, inattentive, or fatigued. The operator monitoring processor 104 is configured to estimate the cognitive state of the operator based on data received from one or more physiological characteristic sensors, imaging sensors, optical sensors, motion detectors, microphones, activity detectors, or the like. For example, the operator monitoring processor 104 could estimate the cognitive state of the operator 109 based on one or more of the following, without limitation: physiological characteristic data (e.g., blood glucose levels, blood oxygen levels, EEG readings, heart rate data, blood pressure data, body temperature, perspiration levels, respiration rate, etc.); eyelid (blinking) observation data; facial expression observation data; body posture observation data; head position observation data; body movement observation data; operator interaction with one or more of the subsystems 106; microphone data (for monitoring sounds and speech of the operator); operator activity data; eye position or focus data; and the like. It should be realized that the manner in which the operator monitoring processor 104 actually estimates the cognitive state of an operator 109 may vary from one deployment of the system 100 to another. In addition to direct operator measurement, the operator monitoring processor 104 may additionally or instead estimate the cognitive state of an operator from indirect operator assessment such as task load estimates based on a record of interaction with system. The operator monitoring processor 104 could be configured to infer the nature and load of current tasks from internal system logs, and use these inferences in determining how to adapt the interaction. For example, if an inexperienced operator is determined to be under low task load, the system 100 could take the opportunity to display the currently active automated modes that would augment the operator's current state awareness and support their learning of the system logic that underlies these modes.

The practical implementation of the operator monitoring processor 104 will vary depending upon the specific monitoring technology that is utilized. For example, the flight operator monitoring processor 104 may cooperate with one or more of the following no-illustrated devices, without limitation: operator-worn or user-carried physiological characteristic sensors or detectors, each of which measures at least one physiological characteristic of the operator; a thermometer; a video or still camera; an optical detector; an infrared or ultrasonic detector; physical position sensors (e.g., inertial sensors, accelerometers, gyroscopic sensors); microphones; system record of interactions; processors or computing modules that analyze and synthesize user interaction with the automated system 102; and the like. These technologies and their related operating principles are known, and, therefore, will not be described herein in detail.

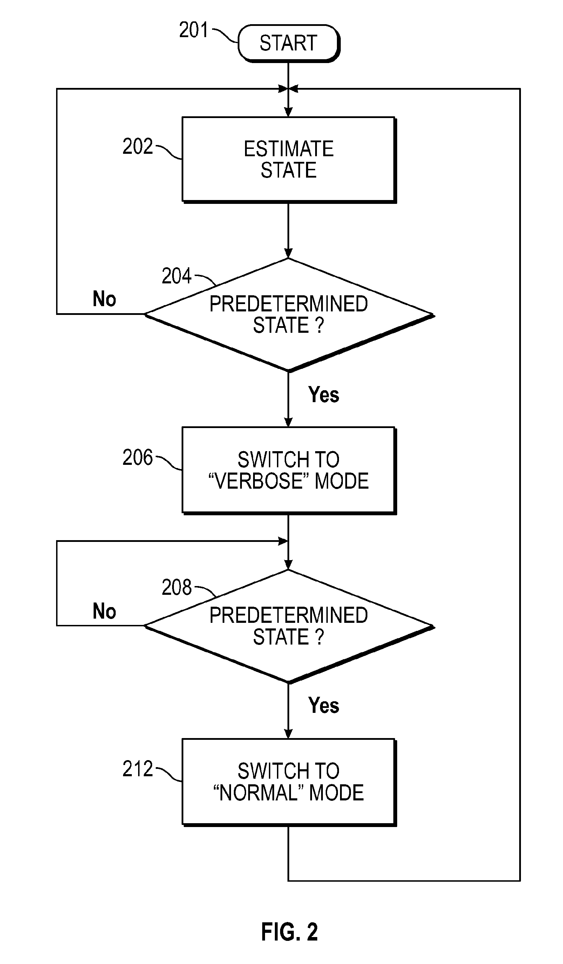

No matter its specific implementation, the operator monitoring processor 104, based on its estimation of the cognitive (or other) state of the operator 109, selectively supplies an initiation signal to the automated system 102 that results in a variation in the interaction between the automated system 102 and the operator 109. More specifically, and as shown in flow chart form in FIG. 2, in one embodiment, if the operator monitoring system 104 determines, based on the estimated state (e.g., cognitive and/or task state) of the operator (202), that the operator 109 is, for example, disengaged, engaged in tasks, inattentive, or fatigued (204), it will supply the initiation signal to the automated system 102. The automated system 102, in response to the initiation signal, is configured to switch from its "normal" mode into what is referred to herein as a "verbose" mode (206). The automated system 102 will remain in the verbose mode until the operator monitoring system 104 determines that the operator 109 is in a sufficient cognitive state (208). At that point the automated system 102 is switched back to the "normal" mode (212).

It is noted that, as used herein, the "normal" mode of the automated system 102 is the nominal level of interaction that the automated system 102 has with the operator 109, and the "verbose" mode is an enhanced level of interaction. For example, in the verbose mode, the automated system 102 conveys more information regarding its functioning, reasoning, and actions to the user 109. The automated system 102 may also implement a computer-mediated dialog, during which the user 109 may be required to respond more often, and in different ways, than in the normal mode.

The manner in which the automated system 102 implements the enhanced level of interaction in the verbose mode may vary. For example, the automated system 102 may render, on one or more of the feedback devices 108 that include a display, data representative of one or more automated processes being implemented in the automated system 102. The automated system 102 may also, or instead, generate, via one or more of the feedback devices 108 that include a sound emitter, aural sounds representative of one or more automated processes being implemented in the automated system 102. The automated system 102 may also, or instead, generate alerts (aural, visual, or both) of increased saliency, frequency, and content. The automated system 102 may also, or instead, provide more descriptions, via one or more of the feedback devices 108, of current states and/or situations, more detailed information to support decisions and situational awareness, and/or more descriptions of the "whys" and "wherefores" of automated system states and behaviors (both current and anticipated). The automated system 102 may also, or instead, bring extra attention, via one or more of the feedback devices 108, to various types of information regarding automated processes. The automated system 102 may also, or instead, generate intentional interruptions, via one or more of the feedback devices 108, if the operator monitoring system 104 detects the user 109 is not doing something he or she should, or is doing something incorrectly. The automated system 102 may also, or instead, provide feedback regarding how-to and where-to find various types of information.

It will be appreciated that the system 100 could also be configured to switch the automated system 102 into the verbose mode based additionally (or instead) on various other states, conditions, functions, and/or parameters. For example, the automated system 102 could be selectively switched into the verbose mode based on data representative of the current operational phase or status of the automated system 102. In the context of an aircraft, these data could be representative of the aircraft phase of flight. The automated system 102 could be selectively switched into the verbose mode based on data representative of a current task being performed by the user 109, which may include detected discrepancies in current task performance, using the directly sensed or inferred physiological state of the operator 109.

The automated system 102 could also, or instead, be configured to implement various rule-based or model-based algorithms to determine whether to switch to the verbose mode. For example, the automated system 102 may implement a look-up table to determine, based on the estimated cognitive state of the user 109 as well as various other types of data, whether to switch to the verbose mode. The automated system 102 may implement one or more decision-making task models, one or more task models of user actions and/or user skills, various system models, the experience level and/or preferences of the user 109, and/or historical data of operator experience in current situations or performance of current functions, just to name a few.

It will be appreciated that the system 100 could be configured such that, when the automated system 102 is switched into the verbose mode, the enhanced level of interaction is a constant. In some embodiments, however, the system 100 may be configured to implement differing levels or types of "verbosity." That is, the enhanced level of interaction includes a plurality of levels of increased interaction. The level of increased interaction may depend on various factors such as, for example, the situation, the functions being performed, and the goals of switching to the verbose mode, just to name a few.

In addition to being configured to automatically initiate the verbose mode, the system 100 may include provision to manually initiate the verbose mode. Thus, as FIG. 1 further depicts, the system 100 may additionally include a manual input device 114. The manual input device 114 may be implemented as a button, a switch, a graphical user interface, or any one of numerous other devices configured to receive an input from the operator 109. The manual input device 114 is configured, in response to input from the operator 109, to supply an input signal to the automated system 102. The automated system 102, in response to the input signal, will switch from the normal mode into the verbose mode.

There may be times when it may be undesirable for the automated system 102 to switch to the verbose mode or, when it is in the verbose mode, to continue operating in this mode. For example, there may be certain operating conditions of the automated system 102 where, regardless of the estimated cognitive state of the operator 109, the verbose mode is undesirable. In the context of a commercial aircraft, such a situation might arise when the operator 109 (e.g., pilot) is receiving a communication from air traffic control, and during taxi, take-off, and landing operations. Various other situations and scenarios may also be contemplated, depending upon the particular configuration and end-use of the automated system 102. No matter the specific situations contemplated, the system 100 is configured to at least inhibit (or prevent) increased interaction between the automated system 102 and the operator 109. The system 100 may be configured to implement this functionality automatically, in response to an input to the manual input device 114, or both.

The system 100 may also be configured, at least in some embodiments, to switch into the verbose mode when opportunities arise to help relatively new, inexperienced operators 109 better learn about the automated system 102. Thus, in addition to switching to the verbose mode based on estimated cognitive state, the automated system 102 could be configured to receive data representative of operator experience level and, based on these data, switch into the verbose mode when the automated system 102 may be implementing a function that the operator 109 has not yet experienced. As such, the automated system 104 may provide, via one or more of the feedback devices 108, questions and learning material to keep the operator engaged. All of this can lead to a stronger knowledge of the automated system 102 and subsystems 106, and how they function and make decisions.

The system and method described herein provide an automated system that selectively operates in a verbose mode. By adapting the timing and content of automation-initiated dialog (verbosity) with pilots, the system could improve pilot mental engagement, augment situational awareness, reduce reaction time to situations, mitigate fatigue, and improve operator awareness and attentiveness, thereby improving the cognitive state and, in some embodiments, the training level of the operator 109.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of adaptively operating an automated system, comprising the steps of:
estimating, in a processor, one or more of a state of the automated system and a state of an operator of the automated system; and
varying interaction between the automated system and the operator, based on one or both of the estimated state of the automated system and the estimated state of the operator.

2. The method of Claim 1, wherein the step of varying interaction comprises one or more of:
rendering, on one or more displays, data representative of one or more automated processes being implemented in the automated system,
generating aural sounds representative of one or more automated processes being implemented in the automated system,
generating, in the automated system, feedback requests that require the operator to supply one or more inputs to the automated system,
generating, in the automated system, alerts of increased saliency, frequency, and content, and
generating, in the automated system, an operator training exercise.

3. The method of Claim 1, further comprising selectively inhibiting interaction between the automated system and the operator.

4. The method of Claim 1, further comprising:
supplying, from a manual input device, an input signal to the automated system,
wherein the step of varying the interaction between the automated system and the operator in response to the input signal.

5. The method of Claim 1, wherein the step of varying the interaction comprises selectively switching, based on the estimated state of the operator, between a nominal level of interaction and an enhanced level of interaction, wherein the enhanced level of interaction includes a plurality of levels of increased interaction.

6. The method of Claim 1, further comprising:
tracking, in the processor, operator interactions with the automated system; and
varying the interaction between the automated system and the operator, based additionally on the operator interactions.

7. The method of Claim 1, wherein the state of the operator is a cognitive state, and wherein the method further comprises:
measuring a physiological characteristic of the operator, resulting in a measured physiological characteristic value; and
estimating the cognitive state from the measured physiological characteristic value.

8. The method of Claim 7, further comprising:
observing a pattern of interactive behavior of the operator with the automated system, resulting in an observed pattern of behavior; and
estimating the cognitive state from the observed pattern of behavior.

9. The method of Claim 7, further comprising:
capturing body movement activity of the operator, resulting in captured body movement activity; and
estimating the cognitive state from the captured body movement activity.

10. A method of adaptively operating an automated system, comprising the steps of:
estimating, in a processor, a cognitive state of an operator of the automated system; and
based on the estimated cognitive state of the operator, varying interaction between the automated system and the operator by one or more of:
rendering, on one or more displays, data representative of one or more automated processes being implemented in the automated system,
generating aural sounds representative of one or more automated processes being implemented in the automated system, and
generating, in the automated system, feedback requests that require the operator to supply one or more inputs to the automated system.
